Europäisches Patentamt

(19) European Patent Office

Office européen des brevets

(11) Publication number: **0 106 134**
**B1**

(12) **EUROPEAN PATENT SPECIFICATION**

(45) Date of publication of patent specification: **12.08.87**

(21) Application number: **83108889.3**

(22) Date of filing: **08.09.83**

(51) Int. Cl.⁴: **G 02 B 6/38, G 02 B 6/44**

(54) Housing for a fiber optic splice.

(30) Priority: **14.09.82 US 418339**

(43) Date of publication of application:
**25.04.84 Bulletin 84/17**

(45) Publication of the grant of the patent:
**12.08.87 Bulletin 87/33**

(84) Designated Contracting States:
**BE DE FR GB SE**

(56) References cited:
**EP-A-0 029 383**
**DE-A-3 017 453**
**DE-B-2 505 027**
**GB-A-2 030 723**
**GB-A-2 060 196**

(73) Proprietor: **GTE Products Corporation**
**100 West 10th Street**
**Wilmington, DE 19801 (US)**

(72) Inventor: **Anderton, John J.**
**12 Chautauqua Court**
**Oil City, PA 16301 (US)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Courier Press, Leamington Spa, England.

## Description

This invention relates to a housing for a fiber optic splice according to the precharacterizing part of claim 1.

There are many advantages to transmitting light energy via optical fiber wave guides and the use thereof is diverse. Single or multiple fiber wave guides may be used simply for transmitting light to a remote location. Complex communication systems may transmit multiple specific optical signals. These devices often require the coupling of fibers in end-to-end relationship. The coupling is a source of light loss with axial misalignment representing a particularly serious problem. Other factors causing signal loss are angular misalignment of fibers, longitudinal separation of fiber ends and reflection or refraction at the fiber ends.

When placing optical fibers in end-to-end relationship to minimize light loss, it is desirable to have a rugged splice that can be simply and reliably used in field installments. The junctioned fibers should be protected from environmental factors and be securely held in place.

The following patents relate to various fiber optic connectors: US—A—3,922,064 to Clark et al, US—A—3,990,779 to McCartney, US—A—4,050,783 to Tardy, US—A—4,050,781 to Beauhaire, US—A—4,097,129 to Wellington et al, and US—A—4,146,229 to Wellington et al.

In addition, once two or more optical fibers have been successfully jointed by virtue of an appropriate splice, it remains necessary to enclose the splice in a suitable housing in order to inter alia, provide the splice with a degree of protection from the surrounding environment. To that end, EP—A—098535 by the same inventor as this application, filed June 30, 1983 (while claiming a US priority of July 8, 1982) and published January 18, 1984 (thus constituting a state of the art under Article 54 (3) EPC), discloses a housing that is suitable for the enclosure of a splice such as disclosed in US—A—4,257,674 to Griffin et al.

The housing for a fiber optic splice of the type stated in the precharacterizing clause of claim 1 is described in the GB—A—2060196 document. This known fiber optic splice housing includes a bottom section and a top section, said sections having each an elongated groove on their faces to be assembled against each other so as to delimit a passageway therebetween, through which the spliced fibers extend, and said sections being locked together by means of hooked members cooperating with corresponding cavities. In order to fix and hold the fiber optic splice within the whole housing, in this GB—A—2060196 application, they use a layer of pressure sensitive adhesive material on each face of the sections overlying the grooves.

With respect to this prior art housing it is the task of the present invention to provide a housing of the type above, for enclosing a fiber optic splice of the loose-buffered, glass tubular type, in which no adhesive is to be used for assembling the top and bottom sections and the fiber optic splice.

According to the invention this task is solved with a housing of the type above having the features of the characterizing clause of claim 1.

Preferred embodiments of the invention are disclosed in the sub-claims.

The elevated members of the top sections thus provide at each end of the housing, in conjunction with the teeth of the bottom section, an aperture through which a fiber may be inserted into the fiber optic splice.

A trough may be cut out of the primary portion so as to accommodate the contours of a particular fiber optic splice to be encountered.

Figures 1A, 1B and 1C are top, side and end views, respectively, of the bottom section of the housing.

Figures 2A, 2B and 2C are top, side and end views, respectively, of the top section of the housing.

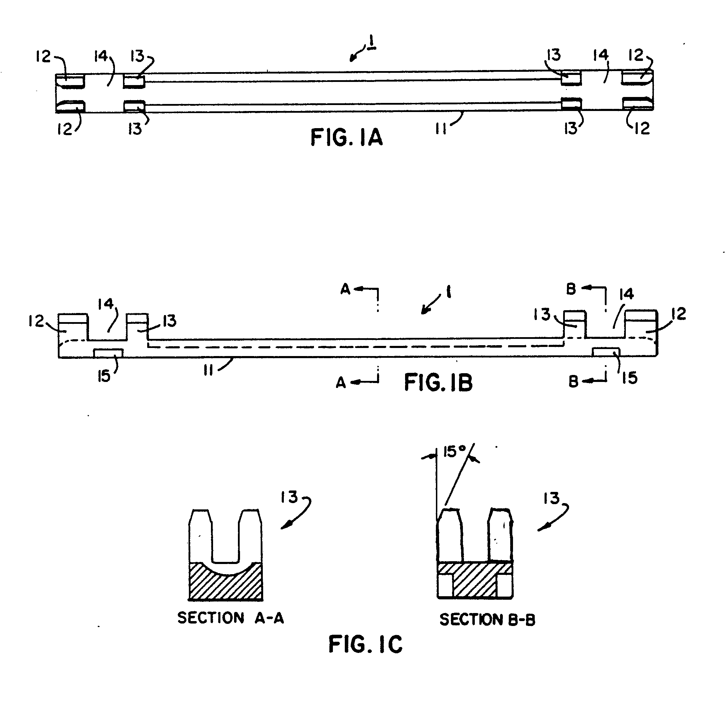

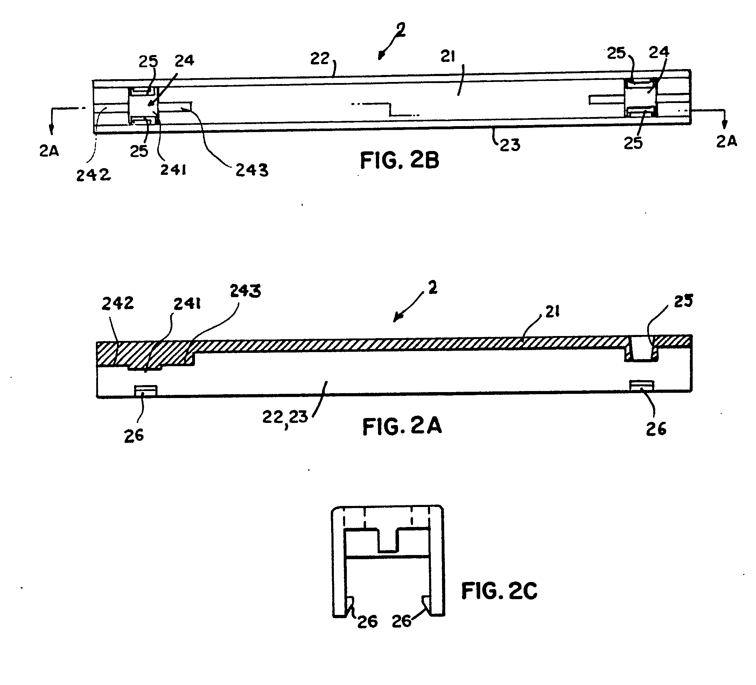

As illustrated in Figures 1 and 2, the subject splice housing comprises respective mating bottom and top sections 1 and 2, each of a substantially elongated nature for accommodating and enclosing the ends of an optical fiber and fiber optic splice used for joining those ends.

Referring now to figures 1A through 1C, the bottom section 1 of this housing is characterized by an elongated, substantially rectangular primary portion 11 which may have a total length, width and thickness of 7.62, 0.46 and 0.22 cm (3.00, 0.180 and 0.087 inches) respectively (It should be noted that the dimensions stated above and hereinafter are provided solely to facilitate a more concrete perception of a specific splice housing and in no way delimits the scope of this invention). Extending upward approximately 0.6 cm (0.238 inch) from and located along the longitudinal sides and at the ends of primary portion of the bottom section are two sets of four teeth members. Four of the teeth, designated as elements 12, are positioned substantially at the respective longitudinal extremities of the bottom section while the remaining four, designated as elements 13, are positioned somewhat inwardly from the extremities. Although the teeth have an approximately identical thickness, 0.15 cm (0.058 inch), teeth 12 may be measurably longer than teeth 13; respective lengths of 0.38 and 0.25 cm (0.150 and 0.100 inch) are deemed typical. As shown in the end view, figure 1C, the teeth comprise a chamfer of approximately 0.025 cm (0.010 inch) at an angle of 15 degrees from the sides of the teeth. As can be most readily seen from the top and side views, figures 1A and 1B, the four pairs of teeth are positioned so as to form spaced portions 14 having a length of approximately 0.51 cm (0.200 inch). The bottom section 1 of the splice housing also includes four substantially rectangular grooves 15 located beneath the spaced portions 14. The grooves 15 are typically characterized by a length, width and height of approximately 0.38, 0.1 and 0.14 cm (0.150, 0.040, and 0.055 inch), respectively. The function of the grooves will be made clear later in the disclosure. Also, as can be most clearly seen in figure 1C, a larger part of the primary portion 11

of the bottom section 1 of the housing, that is, the part bounded by the more inwardly positioned teeth 13, has been provided with a cutout segment, or trough, characterized by a more or less arcuately shaped profile. The profile of the cutout segment, in a specific embodiment, subtends an arc of a circle having a radius of 0.21 cm (0.085 inch). In that embodiment the cutout profile is designed to accommodate a particular tubularly configured splice of a corresponding radius. Accordingly, the cutout profile admits of modification, without departure from the subject invention, necessary to accommodate variously configured fiber optic splices. Finally both the ends of teeth 12, as seen in Figure 1A, and the ends of the primary portion 11 of the bottom section 1 as seen in Figure 1B, may be slightly rounded so as to facilitate the insertion of optical fibers thereinto.

Attention is now drawn to the top section 2 of the housing as illustrated in side, top and end Figures 2A, 2B and 2C, respectively. As shown therein, the top section comprises a substantially rectangular center portion 21 having a length of approximately 7.62 cm (3.00 inches) and a width of approximately 0.7 cm (0.275 inches). Extending downwardly from the longitudinal sides of the center portion 21 are two wall portions 22 and 23, each having a height of approximately 0.7 cm (0.275 inches) so that a side view of the top section 2 assumes a generally U-shaped form characterized by three equivalent sides. Integral to the center portion 21 of the top section 2 are two elevated members 24 positioned at each end of the center portion. The elevated members 24 each comprise a middle segment 241 and a pair of arm segments, 242 and 243, extending longitudinally from opposite sides of the middle segment 241 along a central axis of the center portion. The total length of each of the elevated members 24 is 1.14 cm (0.450 inch), 0.38 cm (0.150 inch) allotted to each arm and 0.38 cm (0.150 inch) to the middle segment. The arm segments are elevated a total of approximately 0.15 cm (0.060 inch) from the surface of the center portion and the middle segments are elevated somewhat beyond the arm segments. A pair of slots 25, a total of four, are cut in each of the middle segments of the elevated members 24, one adjacent each of the walls of the top section. The length of the slots is slightly shorter than the length of the middle segments and their width is approximately 0.1 cm (0.040 inch). The elevated members 24 are designed so that, with the top section 2 placed over the bottom section 1 of the housing, the teeth members of the bottom section will be aligned on opposite sides of the arm segments, that is, two on each of the opposite sides of each arm segment. In addition, the middle segment of each elevated member will align with the spaced portions 14 formed by each of the two sets of four teeth in the bottom section 1. In addition, each of the wall portions 22, 23 of the top section 2 includes a pair of tapered flange members 26, or tabs, extending a total of approximately 0.38 cm (0.150 inch) from the ends of the wall portions. The four flange members 26 are designed to align with the four grooves 15 in the bottom section 1 so that, subsequent a press fit of the top section 2 over the bottom section 1, a locked condition is maintained between the top and bottom sections of the housing. A substantially fixed relationship is thereby maintained, via the interaction of the elevated members 24 and spaced portions 14, as well as the locked tabs 26 and grooves 15, so as to provide proper enclosure of a fiber optic splice within the housing.

The invention is useful in the implementation of fiber optic communication and information delivery systems.

**Claims**

1. A housing for enclosing a fiber optic splice, the housing including an elongated bottom section (1) and an elongated top section (2), mateable with each other, said sections being arranged for enclosing the fiber optic splice therein when mated with each other, while forming at each end an aperture for the passage of the spliced fibers therethrough, and said sections being lockable together in the mated position by means of hooked members (25) cooperating with corresponding cavities (15), characterized in that:

said elongated bottom section (1) comprises a substantially rectangular longitudinally extending primary portion (11) a first and second set of teeth (12, 13) respectively positioned at one and the other end of the primary portion (11) and extending upwardly therefrom, said first and second set (12, 13) each consisting of 4 teeth, said teeth being located along the longitudinal sides of the primary portion so as to respectively form a traverse and a longitudinal space among each other; and a first and second pair of cavities (15), forming said cavities for receiving the hooked members, said cavities being cut out of the bottom surface of the primary portion and positioned on the opposite longitudinal sides at each end of the primary portion (11), in the region where the traverse space exists between the teeth of each set of teeth; and in that said elongated top section (2) comprises a substantially rectangular longitudinally extending centre portion (21); a pair of wall members (22, 23) extending downwardly along the longitudinal sides of the centre portion (21); a pair of elevated members (241, 242, 243) integral to and protruding downwardly from the inner surface of the centre portion (21), said elevated members being positioned each at one respective end of the centre portion and comprising each a middle segment (241) and a pair of arm segments (242, 243) extending longitudinally outwardly from each side of the middle segment (241), said elevated members being so arranged with respect to the teeth of the bottom section that when the top section is placed over said bottom section, said arm segments (242, 243) of each elevated member extend through the longitudinal space between the teeth of each set and said middle segment (241) extends through the traverse space between the teeth while still providing said aperture for the passage of the spliced fibers therethrough; and two pairs of tapered tabs (26), forming the hooked members, said tabs (26) extending inwardly from the inner surfaces of the wall members (22, 23) at locations to hook into the cavities (15) to maintain a secure relationship between the mated top and bottom section (1, 2).

2. A housing as defined in claim 1 wherein the primary portion (11) of the bottom section 1 comprises a trough for accommodating the fiber optic splice.

3. A housing as defined in claim 2 wherein the trough has an arc shaped profile so as to accommodate a tubular splice.

4. A housing as defined in claim 1 or claim 2 wherein the teeth (12, 13) comprised by the bottom section (1) are chamfered.

5. A housing as defined in claim 1 wherein the pairs of teeth (12, 13) have a measurably unequal length.

6. A housing as defined in claim 1 wherein the cavities (15) have a substantially rectangular profile.

7. A housing as defined in claim 1 wherein the middle segments (241) of the elevated members protrude somewhat further than the arm segments (242, 243) from the surface of the centre portion (21).

8. A housing as defined in claim 1 wherein the centre portion (21) of the top section (2) comprises two pairs of slots (25) cut out of and positioned at opposite ends of the centre portion (21).

9. A housing as defined in claim 1 wherein at least some of the teeth (12, 13) of the bottom section (1) are rounded.

**Patentansprüche**

1. Gehäuse zum Aufnehmen einer Verbindungsstelle einer optischen Faser, das ein längliches Bodenteil (1) und ein passendes Deckelteil (2) umfaßt, wobei diese Teile, wenn sie zusammengebracht sind, eine Verbindungsstelle einer optischen Faser umschließen und wobei an jedem Ende eine Öffnung vorhanden ist, durch die die verbundenen Fasern verlaufen, und mit hakenförmigen Elementen (25), die mit entsprechenden Ausnehmungen (15) zusammenarbeiten, um die beiden Teile passend miteinander zu verschließen, dadurch gekennzeichnet, daß der längliche Bodenteil (1) einen ersten, im wesentlichen rechteckigen sich längserstreckenden ersten Bereich (11) hat, mit einem ersten und einem zweiten Satz von Zähnen (12, 13), die an dem einen bzw. an dem anderen Ende des ersten Bereichs angeordnet sind und sich von dort nach oben erstrecken, wobei jeder Satz (12, 13) aus vier Zähnen besteht und die Zähne entlang der Längsseiten des ersten Bereichs so angeordnet sind, daß sie quer und längs zueinander einen Zwischenraum bilden; mit einem ersten und einem zweiten Paar von Räumen (15), die die Räume zur Aufnahme der Hakenelemente bilden, wobei diese Räume aus der Bodenfläche des ersten Bereichs ausgeschnitten sind und so angeordnet sind, daß sie sich am ersten Bereich (11) einander dort gegenüberliegen, wo der Querabstand zwischen den Zähnen der Zahnsätze gebildet ist und daß der längliche Deckelteil (2) einen rechteckigen, sich im wesentlichen Längserstreckenden Mittelteil (21) aufweist, mit einem Wandpaar (22, 23), das sich an den Längsseiten des Mittelteils nach unten erstreckt, mit einem erhöhten Elementenpaar (241, 242, 243), das Bestandteil des mittleren Bereichs (21) ist und sich nach unten von der inneren Fläche erstreckt, und wobei diese erhöhten Elemente jeweils an einem entsprechenden Ende des Mittelbereichs angeordnet sind und jeweils seinen mittleren Abschnitt (241) und Schultersegmente (242, 243) umfassen, die sich längsseits nach außen zu beiden Seiten des mittleren Abschnitts (241) erstrecken, wobei die abstehenden Elemente bezüglich der Zähne des Bodenteils so angeordnet sind, daß dann, wenn der Deckelteil über den Bodenteil gelegt ist, die Schultern (242, 243) der erhöhten Elemente sich durch den Längsabstandsraum zwischen den jeweiligen Zahnsätzen erstreckt und wobei das mittlere Segment (241) sich durch den Querabstandsraum zwischen den Zähnen erstreckt, aber so, daß es noch einen Freiraum zum Durchtritt der zu verbindenden Fasern läßt und mit zwei sich verjüngenden Ansätzen (26), die die hakenförmigen Elemente bilden, wobei sich die Ansätze (26) nach innen von den Innenflächen der Wandelemente (22, 23) an Stellen erstrecken, derart, daß sie in die Räume (15) einrasten können, um so den Boden- und Deckelteil sicher zusammenzuhalten.

2. Gehäuse nach Anspruch 1, wobei der erste Bereich (11) des Bodenteils (1) einen Durchgang für die zu verbindende optische Faser aufweist.

3. Gehäuse nach Anspruch 2, wobei der Durchgang ein bogenförmiges Profil hat, um so eine Faser in der Art einer Röhre aufzunehmen.

4. Gehäuse nach Anspruch 1 oder 2, wobei die Zähne des Bodenteils (1) abgeschrägt sind.

5. Gehäuse nach Anspruch 1, wobei die Zahnpaare (12, 13) eine meßbare ungleiche Länge haben.

6. Gehäuse nach Anspruch 1, wobei die Räume (15) ein im wesentlichen rechteckiges Profil haben.

7. Gehäuse nach Anspruch 1, wobei die mittleren Segmente (241) der erhöhten Elemente sich etwas weiter als die Schultersegmente (242, 243) von der Oberfläche des mittleren Bereichs (21) weg erstrecken.

8. Gehäuse nach Anspruch 1, wobei der Mittelteil (21) des Deckelteils (2) zwei Schlitzpaare (25) aufweist, die an gegenüberliegenden Enden im Mittelteil (21) ausgespart sind.

9. Gehäuse nach Anspruch 1, wobei wenigstens einige der Zähne (12, 13) des Bodenteils (1) abgerundet sind.

## Revendications

1. Boitier enfermant une jonction de fibres optiques et comprenant un fond (1) de forme allongée et un couvercle (2) de forme allongée coopérant ensemble, le fond et le couvercle étant prévus pour enfermer la jonction des fibres optiques lorsqu'ils sont réunis, tout en ménageant une ouverture à chaque extrémité pour le passage des fibres, le fond et le couvercle pouvant être verrouillés en position fermée au moyen de crochets (25) coopérant avec des cavités correspondantes (15), caractérisé en ce que:

le dit fond de forme allongée (1) comprend une partie principale (11) substantiellement rectangulaire et s'étendant longitudinalement, des premier et deuxième ensembles de dents (12, 13) disposées respectivement à chaque extrémité de la partie principale (11) dont elles font saillie vers le haut, et comprenant chacune quatre dents disposées sur les parois latérales de la partie principale de manière à constituer entre elles un passage et un espace longitudinal, et un premier et un second couples de cavités (15) constituant les dites cavités de réception des crochets et étant pratiquées sur la surface du fond de la partie principale et disposées sur les parois latérales opposées à chaque extrémité de la partie principale (11) dans la zone où le passage existe entre les dents de chaque ensemble de dents;

et en ce que:

le dit couvercle de forme allongée (2) comprend une partie centrale (21) substantiellement rectangulaire s'étendant longitudinalement, deux parois (22, 23) faisant saillie vers le bas le long des bords longitudinaux de la partie centrale (21), deux éléments surélevés (241, 242, 243) faisant partie de et saillie vers le bas de la surface interne de la partie centrale (21), disposés chacun à l'une des extrémités de la partie centrale et comprenant chacun un milieu (241) et deux bras (242, 243) s'étendant de part et d'autre du milieu (241), les dits éléments surélevés étant disposés par rapport aux dents du fond de telle manière que, lorsque le couvercle est mis en place sur le dit fond, les dits bras (242, 243) de chaque élément surélevé s'étendent à travers l'espace longitudinal ménagé entre les dents de chaque ensemble et que le milieu (241) s'étende dans le passage entre les dents tout en ménageant la dite ouverture pour l'introduction des fibres, et deux couples de pattes effilées (26), constituant les crochets, faisant saillie vers l'intérieur à partir de l'intérieur des parois (22, 23), de manière à coopérer avec les cavités (15) pour assurer la fixation du couvercle (1) et du fond (2).

2. Boitier selon la revendication 1 caractérisé en ce que la partie principale (11) du fond (1) comporte une rigole pour la réception des fibres optiques.

3. Boitier selon la revendication 2 caractérisé en ce que la rigole présente une section de forme courbe de manière à accueillir une fibre de forme tubulaire.

4. Boitier selon la revendication 1 ou 2 caractérisé en ce que les dents (12, 13) du fond (1) sont biseautées.

5. Boitier selon la revendication 1 caractérisé en ce que les deux dents (12, 13) sont de longueurs notablement inégales.

6. Boitier selon la revendication 1 caractérisé en ce que les cavités (15) présentent une section de forme substantiellement rectangulaire.

7. Boitier selon la revendication 1 caractérisé en ce que le milieu (241) de l'élément surélevé fait saillie de la surface de la partie centrale (21) un peu plus que le bras (242, 243).

8. Boitier selon la revendication 1 caractérisé en ce que la partie centrale (21) du couvercle (2) comporte deux paires de fentes (25), lesdites fentes étant évidées aux extrémitées opposées de la partie centrale (21).

9. Boitier selon la revendication 1 caractérisé en ce que en moins plasieurs des dents (12, 13) du fond (1) sont arrondis.

**0 106 134**

FIG. IA

FIG. IB

SECTION A-A       SECTION B-B

FIG. IC

1

FIG. 2B

FIG. 2A

FIG. 2C